# EUROPEAN PATENT APPLICATION

(11) **EP 4 844 994 A1**
(43) Date of publication of application: **25.11.2026**
(21) Application number: 24917586.0
(22) Date of filing: 18.01.2024
(51) Int. Cl.: H02K 5/22

(54) **MOTOR DEVICE**

(71) Applicant: JTEKT CORPORATION, Kariya-shi, Aichi 448-8652 (JP)
(72) Inventor: SATO Yuto, Kariya-shi, Aichi 448-8652 (JP); HAYASHI Yuki, Kariya-shi, Aichi 448-8652 (JP); MATSUMOTO Yukiaki, Kariya-shi, Aichi 448-8652 (JP)
(74) Representative: Winter, Brandl - Partnerschaft mbB
(86) International application number: PCT/JP2024/001194
(87) International publication number: WO 2025/154217

(57) **Abstract**

A motor device (11) includes a motor (12) and a control device (32) including a board (32). The motor includes a case (21), a stator (23), a rotor (25) that includes an output shaft (25A), a bearing (22D), a bearing holder (22) for holding the bearing, and a busbar module (24). The bearing holder includes a thick-walled portion (22A) including a terminal insertion hole that passes through in an axial direction, and a thin-walled portion (22B) that is thinner in the axial direction than the thick-walled portion. The busbar module includes a busbar holder (24A) that holds busbars. The busbars include motor terminals (24B). The busbar holder includes an enclosing portion (24C) that encloses a portion including basal ends of the motor terminals, and the enclosing portion is inserted into the terminal insertion hole so as not to completely pass through the terminal insertion hole in the axial direction. A space (SP) exists around a portion of the motor terminals that is exposed from the enclosing portion, and the space is a clearance between an inner circumferential face of the terminal insertion hole and a surface of the motor terminals.

## Description

### TECHNICAL FIELD

The present disclosure relates to a motor device.

### BACKGROUND ART

A motor device described in Patent Document 1, for example, includes a motor, a bearing holder, and a busbar unit. The busbar unit is disposed between the motor and the bearing holder. The busbar unit includes a plurality of busbars, and an electrically insulating busbar holder that encloses the plurality of busbars. Each of the plurality of busbars is connected to a respective one of a plurality of coils, and is inserted through a respective one of a plurality of through holes in the bearing holder. The busbar holder includes a holding portion that holds a plurality of terminals. The holding portion includes a plurality of insertion portions that surrounds parts of the plurality of busbars that are inserted into the through holes. Each of the plurality of insertion portions is inserted or press-fitted into the plurality of through holes. The insertion portions avert contact between the inner faces of the through holes in the bearing holder and the surfaces of the busbars.

The bearing holder includes a thick-walled portion extending in a direction orthogonal to a shaft of the motor, and a thin-walled portion that is thinner than the thick-walled portion. The thin-walled portion is provided around the plurality of through holes in the bearing holder. The thin-walled portion is formed by creating a recess in a face of the bearing holder opposite to the busbar unit. The recess opens on the opposite side from the busbar unit. The thin-walled portion is a thin-walled portion of the bearing holder that remains on the busbar unit side.

### Related Art Documents

### Patent Documents

Patent Document 1: Japanese Unexamined Patent Application Publication No. 2020-099144 (JP 2020-099144 A)

### SUMMARY OF THE INVENTION

### Problem to be Solved by the Invention

Motor devices require stable support for motor terminals, which are part of busbars, while ensuring freedom of the motor terminals at distal ends thereof.

### Means for Solving the Problem

A motor device according to an aspect of the present disclosure includes a motor and a control device including a board that is provided at an end portion of the motor. The motor includes a case including an end wall at a first end portion on an opposite side from the control device, a stator that is cylindrical, includes a plurality of windings, and is fitted into an inner circumferential face of the case, a rotor that is disposed inside of the stator without being in contact with the stator, and that includes an output shaft that passes through the stator in an axial direction, a bearing that rotatably supports the output shaft, a bearing holder that is made of metal and is attached to a second end portion of the case, and holds the bearing, and a busbar module disposed between the stator and the bearing holder. The bearing holder includes a thick-walled portion including a terminal insertion hole that passes through in the axial direction, and a thin-walled portion that is thinner in the axial direction than the thick-walled portion. The busbar module includes a plurality of busbars and a busbar holder, made of resin, that holds the busbars. The busbar includes motor terminals that pass through the terminal insertion hole in the axial direction without coming into contact with an inner circumferential face of the terminal insertion hole, and that are connected to the board. The busbar holder includes an enclosing portion that encloses a portion including basal ends of the motor terminals, and the enclosing portion is inserted into the terminal insertion hole so as not to completely pass through the terminal insertion hole in the axial direction. A space exists around a portion of the motor terminals that is exposed from the enclosing portion, and the space is a clearance between the inner circumferential face of the terminal insertion hole and a surface of the motor terminals.

### BRIEF DESCRIPTION OF THE DRAWINGS

[FIG. 1] FIG. 1 is a sectional view of a motor device according to an embodiment, taken along an axial direction.
[FIG. 2] FIG. 2 is a sectional view, illustrating a principal portion of the motor device of FIG. 1.
[FIG. 3] FIG. 3 is a sectional view of the principal portion, illustrating a first mounting orientation of the motor device of FIG 1.
[FIG. 4] FIG. 4 is a sectional view of the principal portion, illustrating a second mounting orientation of the motor device of FIG 1.
[FIG. 5] FIG. 5 is a sectional view of the principal portion, illustrating a third mounting orientation of the motor device of FIG 1.
[FIG. 6] FIG. 6 is a sectional view, illustrating the principal portion of the motor device of FIG. 1.
[FIG. 7] FIG. 7 is a sectional view, illustrating the principal portion of the motor device of FIG. 1.

### MODES FOR CARRYING OUT THE INVENTION

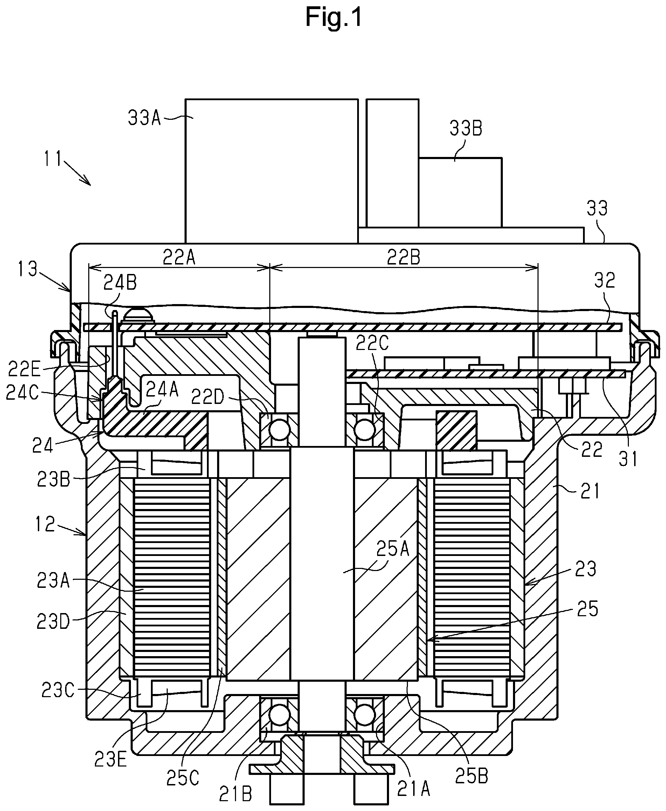

A motor device according to an embodiment will be described. As illustrated in FIG. 1, a motor device 11 includes a motor 12 and a control device 13. The motor 12 is, for example, a three-phase brushless motor. The control device 13 is provided at an axial direction end portion of the motor 12. The control device 13 controls driving of the motor 12.

### <Motor 12>

First, a configuration of the motor 12 will be described. The motor 12 includes a case 21, a bearing holder 22, a stator 23, a busbar module 24, and a rotor 25.

The case 21 includes a peripheral wall having a circular cross-sectional shape, and an end wall that closes off a first end portion of the peripheral wall. A second end portion of the peripheral wall is externally open. The second end portion is an end portion on an opposite side from the first end portion of the peripheral wall. The first end portion of the peripheral wall is also a first end portion of the case 21. The second end portion of the peripheral wall is also a second end portion of the case 21. The case 21 includes a first bearing support portion 21A. The first bearing support portion 21A is provided on the end wall of the case 21. The first bearing support portion 21A is a spatial portion having a circular cross-sectional shape, communicating between the inside and outside of the case 21. A first bearing 21B is mounted to the first bearing support portion 21A.

The bearing holder 22 is attached to the second end portion of the case 21. The bearing holder 22 is fitted inside the second end portion of the case 21. The bearing holder 22 includes a thick-walled portion 22A, a thin-walled portion 22B, and a second bearing support portion 22C.

**In** the axial direction of the motor 12, the thick-walled portion 22A is thicker than the thin-walled portion 22B. The thick-walled portion 22A protrudes in an opposite direction from the stator 23, relative to the thin-walled portion 22B. That is to say, an outer face of the thick-walled portion 22A is situated outward in the axial direction from an outer face of the thin-walled portion 22B. The outer face is a face on a side of the case 21 that extends from the first end portion to the second end portion, from among the thick-walled portion 22A and the thin-walled portion 22B. The outer side is a side of the case 21 that extends from the first end portion to the second end portion. The second bearing support portion 22C is provided on an inner face of the bearing holder 22. The inner face is a face on a side of the bearing holder 22 that extends from the second end portion to the first end portion of the case 21.

The second bearing support portion 22C is a spatial portion having a circular cross-sectional shape, and is open to both the inner face and an outer face of the bearing holder 22. The second bearing support seat 22C is disposed coaxially with the first bearing support portion 21A. A second bearing 22D is mounted to the second bearing support portion 22C. The bearing holder 22 is made of a metal with excellent thermal conductivity, such as aluminum or the like, for example. The bearing holder 22 also functions as a heat sink that promotes heat dissipation.

The stator 23 is fitted into an inner circumferential face of the case 21. The stator 23 includes a stator core 23A, a first insulator 23B, a second insulator 23C, a plurality of windings 23D, and a stator holding member 23E. The stator core 23A is a cylindrical body having a circular cross-sectional shape. The first insulator 23B is provided at a first end portion of the stator core 23A. The second insulator 23C is provided at a second end portion of the stator core 23A. The winding 23D is wound around the stator core 23A, via the first insulator 23B and the second insulator 23C. The stator holding member 23E is a cylindrical body having a circular cross-sectional shape. An inner circumferential face of the stator holding member 23E is attached to an outer circumferential face of the stator core 23A. The stator 23 is supported inside the case 21 via the stator holding member 23E.

The busbar module 24 is disposed between the bearing holder 22 and the stator 23. The busbar module 24 is provided at an end portion of the stator 23. The end portion is an end portion of the stator 23 on the bearing holder 22 side. The busbar module 24 includes a plurality of busbars made of metal, and a busbar holder 24A made of resin. The busbar holder 24A is a cylindrical body having a circular cross-sectional shape. A portion of the bearing holder 22, on which the second bearing support portion 22C is provided, is inserted inside of the busbar holder 24A, without contact with the busbar holder 24A. A position of the bearing holder 22 in the axial direction, and a position of the second bearing 22D in the axial direction, overlap. Each of the busbars is formed by plastically deforming a metal sheet that has been punched out into a predetermined shape. Each of the busbars is held in the busbar holder 24A. Each of the busbars corresponds to a respective one of the three phases. Each of the busbars is connected to an end portion of the winding 23E of the corresponding phase of the three phases.

Each of the busbars includes a motor terminal 24B. Each of the motor terminals 24B is part of the respective busbar and is disposed on a peripheral edge portion of the bearing holder 22. Also, each of the motor terminals 24B is disposed on an outward side in a radial direction from an outer circumferential face of the stator 22. Each of the motor terminals 24B extends in the axial direction of the motor 12, and protrudes, from an outer face of the busbar holder 24A, outward of the busbar holder 24A. The outer face is a face of the busbar holder 24A that faces the bearing holder 22 in the axial direction. The outer side is a side from the busbar holder 24A towards the bearing holder 22. The motor terminals 24B are disposed in a row as viewed from a direction orthogonal to the axial direction of the motor 12, although this is omitted from illustration. A distal end of each of the motor terminals 24B passes through the bearing holder 22, in particular through a peripheral edge portion of the thick-walled portion 22A, in the axial direction, without coming into contact with the thick-walled portion 22A. Three-phase alternating current power is supplied to the three-phase windings 23E via the busbars. Details of a support structure for the motor terminals 24B will be described later.

The rotor 25 includes an output shaft 25A, a rotor core 25B, and a rotor magnet 25C. The output shaft 25A is rotatably supported via the first bearing 21B and the second bearing 22D. A first end portion of the output shaft 25A passes through an end wall of the case 21 without coming into contact with the end wall, and externally protrudes therefrom. A second end portion of the output shaft 25A extends toward the control device 13. The rotor core 25B is a cylindrical body having a circular cross-sectional shape, and is attached to an outer circumferential face of the output shaft 25. The rotor magnet 25C is, for example, a cylindrical body having a circular cross-sectional shape, and is attached to an outer circumferential face of the rotor core 25B. The rotor core 25B and the rotor magnet 25C are disposed inside of the stator core 23A. A slight clearance is formed between an outer circumferential face of the rotor magnet 25C and an inner circumferential face of the stator core 23A.

### <Control Device 13>

Next, a configuration of the control device 13 will be described. The control device 13 includes a control board 31, a power board 32, and a cover 33.

The control board 21 includes electronic components for controlling power supply to the motor 12. The control board 21 is disposed so as to cover the outer face of the thin-walled portion 22B of the bearing holder 22. The power board 32 includes electronic components for supplying electric power to the motor 12 under control by the control board 31. The power board 32 is situated outward in the axial direction from the control board 31. That is to say, the power board 32 is farther away from the stator 23 than the control board 31 in the axial direction of the motor 12. The power board 32 is disposed so as to cover the control board 31 and the outer face of the thick-walled portion 22A of the bearing holder 22. The distal ends of the motor terminals 24B pass through the power board 32 in the axial direction, and are also connected to the power board 32 by soldering.

The cover 33 is made of synthetic resin. The cover 33 is a box-shaped member that is open toward the motor 12. The cover 33 is attached to the second end portion of the case 21. The cover 33 covers the second end portion of the case 21.

The cover 33 includes a power source connector 33A. The power source connector 33A extends in an opposite direction from the motor 12. The power source connector 33A includes a power source terminal and a ground terminal. The power source terminal and the ground terminal are connected to the power board 32 by soldering. A power source plug that is a mating component is fit to the power source connector 33A. The power source plug is connected to a direct current power source, such as a battery or the like, via a power source line. Power from the direct current power source is supplied to the control board 31 and the power board 32 via the power source terminal and the ground terminal.

The cover 33 includes a signal connector 33B. The signal connector 33B extends in the opposite direction from the motor 12. The signal connector 33B includes signal terminals. A signal plug that is a mating component is fit to the signal connector 33B. The signal plug is connected to a higher-level control device via a signal line. The control board 31 and the higher-level control device exchange signals via the signal terminals.

### <Support Structure for Motor Terminals 24B>

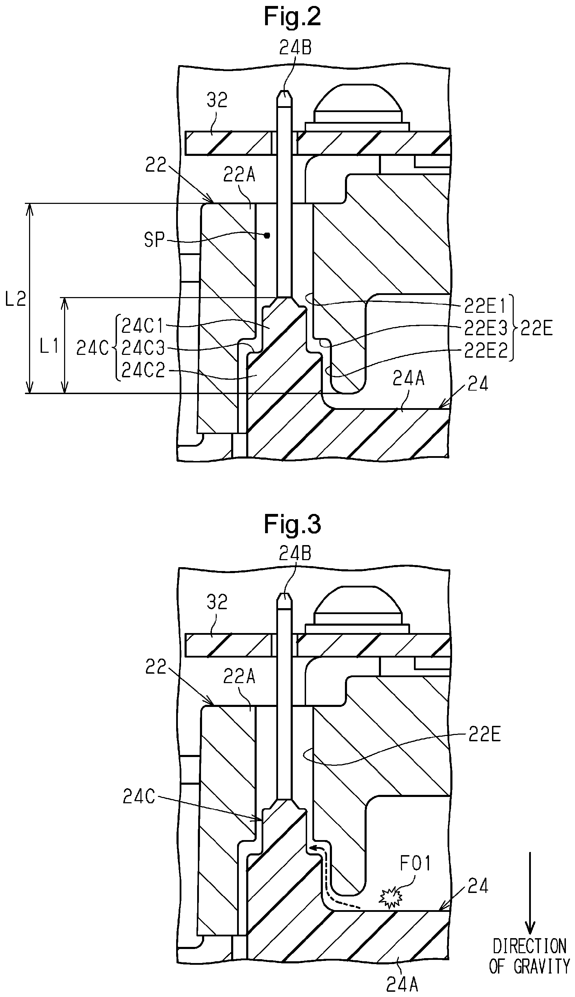

Next, the support structure for the motor terminals 24B will be described. As illustrated in FIG. 2, the bearing holder 22 includes a terminal insertion hole 22E. The terminal insertion hole 22E is disposed in the thick-walled portion 22A. The terminal insertion hole 22E passes through the thick-walled portion 22A in the axial direction. The terminal insertion hole 22E is, for example, a stepped hole having a rectangular cross-sectional shape. The terminal insertion hole 22E enables insertion of the three motor terminals 24B that are disposed in a row.

The terminal insertion hole 22E includes a first hole portion 22E1 and a second hole portion 22E2. In the radial direction of the motor 12, the length of the first hole portion 22E1 is longer than the length of the second hole portion 22E2. The first hole portion 22E1 opens onto the outer face of the thick-walled portion 22A. A first stepped portion 22E3 is formed between the first hole portion 22E1 and the second hole portion 22E2. The first stepped portion 22E3 is a flat face that spreads in the radial direction of the motor 12, i.e., in a direction orthogonal to the axial direction of the motor 12.

The busbar holder 24A includes an enclosing portion 24C. The enclosing portion 24C is a portion of the busbar holder 24A that is inserted into the terminal insertion hole 22E, and that collectively surrounds a portion including a basal end of each of the motor terminals 24B. The basal end is an end portion on an opposite side from the distal end of each of the motor terminals 24B, and is a starting point of rising from the outer face of the busbar holder 24A toward the bearing holder 22. The portion of each of the motor terminals 24B including the basal ends thereof is covered and held by the enclosing portion 24C. The enclosing portion 24C is, for example, a stepped columnar body having a rectangular cross-sectional shape.

The enclosing portion 24C includes a first insertion portion 24C1 and a second insertion portion 24C2. The first insertion portion 24C1 is further away from the outer face of the busbar holder 24A than the second insertion portion 24C2. **In** the radial direction of the motor 12, the length of the first insertion portion 24C1 is shorter than the length of the second insertion portion 24C2. A second stepped portion 24C3 is formed between the first insertion portion 24C1 and the second insertion portion 24C2. The second stepped portion 24C3 is a flat face that spreads in the radial direction of the motor 12, i.e., in the direction orthogonal to the axial direction of the motor 12. The enclosing portion 24C is a two-tiered columnar body.

The first insertion portion 24C1 is inserted into the first hole portion 22E1. Note, however, that a distal end of the first insertion portion 24C1 is situated inside of the first hole portion 22E1. That is to say, the distal end of the first insertion portion 24C1 does not completely pass through the first hole portion 22E1 in the axial direction. A first clearance is formed between an outer circumferential face of the first insertion portion 24C1 and an inner circumferential face of the first hole portion 22E1. The second insertion portion 24C2 is inserted into the second hole portion 22E2. A second clearance is formed between an outer circumferential face of the second insertion portion 24C2 and an inner circumferential face of the second hole portion 22E2. The second clearance is wider than the first clearance. The second stepped face 24C3 faces a first stepped face 22B3 in the axial direction.

When viewed from a direction orthogonal to the axial direction of the motor 12, a crank-shaped clearance is formed between the outer circumferential face of the enclosing portion 24C and the inner circumferential face of the terminal insertion hole 22E. The crank shape is a shape obtained by joining two right-angle curves to each other. The inner circumferential face of the first hole portion 22E1, the first stepped portion 22E3, the outer circumferential face of the first insertion portion 24C1, and the second stepped portion 24C3 form a first corner portion of the crank-shaped clearance. The first stepped portion 22E3, the inner circumferential face of the second hole portion 22E2, the second stepped portion 24C3, and the outer circumferential face of the second insertion portion 24C2 form a second corner portion of the crank-shaped clearance. The first corner portion and the second corner portion correspond to the right-angle curves of the crank.

A third clearance is formed between an outer circumferential face of portions of the motor terminals 24B that protrude from the enclosing portion 24C, and the inner circumferential face of the first hole portion 22E1. The third clearance is wider than the first clearance between the outer circumferential face of the first insertion portion 24C1 and the inner circumferential face of the first hole portion 22E1. The third clearance is also wider than the second clearance between the outer circumferential face of the second insertion portion 24C2 and the inner circumferential face of the second hole portion 22E2. The third clearance is a space SP that exists around the portion of the motor terminal 24B that is exposed from the enclosing portion 24C.

### <Functions of Present Embodiment>

Next, functions of the present embodiment will be described. As illustrated in FIG. 2, the terminal insertion hole 22E includes the first stepped portion 22E3. The enclosing portion 24C includes the second stepped portion 24C3. The first stepped portion 22E3 and the second stepped portion 24C3 face each other in the axial direction of the motor 12. Accordingly, the crank-shaped clearance between the outer circumferential face of the enclosing portion 24C and the inner circumferential face of the terminal insertion hole 22E functions as a labyrinth structure.

As illustrated in FIG. 3, foreign matter FO1 may be generated inside the motor 12. Examples of foreign matter FO1 include dust, metal powder, resin powder, and spatter that is generated when connecting the busbars and the windings 23E. However, the crank-shaped clearance functions as a labyrinth structure. Accordingly, foreign matter FO1 generated inside the motor 12 does not readily pass through the crank-shaped clearance. Thus, foreign matter FO1 generated inside the motor 12 is suppressed from entering inside of the control device 13 from inside of the motor 12.

Also, as illustrated in FIG. 2, a fitting length L1 is ensured between the enclosing portion 24C and the terminal insertion hole 22E. The fitting length L1 is, for example, about half the total length L2 of the terminal insertion hole 22E, and is within a tolerance range with half of a total length L2 of the terminal insertion hole 22E as a reference. The tolerance range is set through experimentation or simulation. Accordingly, length of the crank-shaped clearance is ensured in the axial direction of the motor 12. Thus, regardless of orientation in which the motor device 11 is mounted on a mounting object, foreign matter FO1 generated inside the motor 12 can be suppressed from entering inside of the control device 13 from inside of the motor 12.

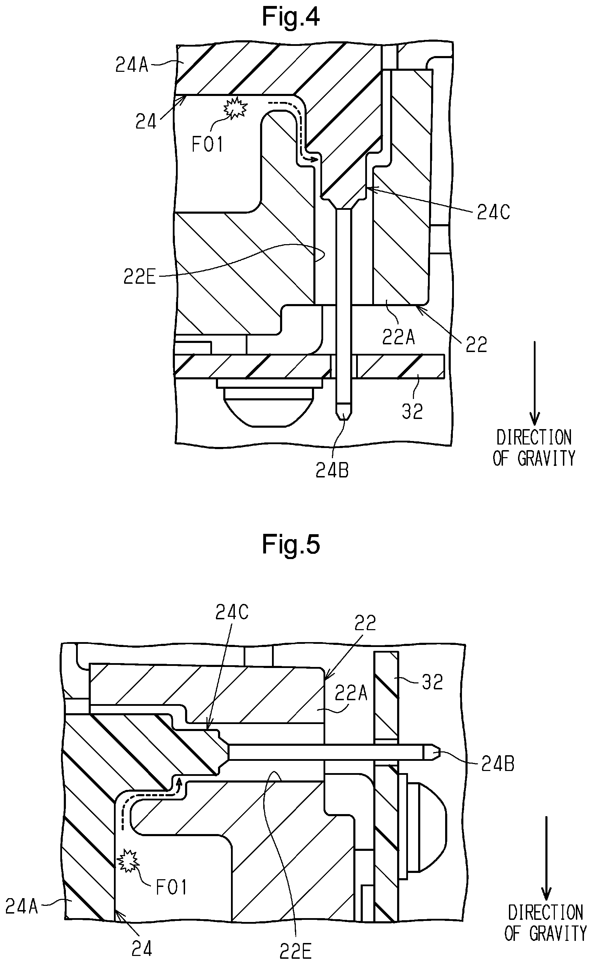

Examples of orientation of the motor device 11 include a first mounting orientation, a second mounting orientation, and a third mounting orientation. As illustrated in FIG. 3, the first mounting orientation is an orientation of the motor device 11 in which the enclosing portion 24C faces upward in the direction of gravity. As illustrated in FIG. 4, the second mounting orientation is an orientation of the motor device 11 in which the enclosing portion 24C faces downward in the direction of gravity. As illustrated in FIG. 5, the third mounting orientation is an orientation of the motor device 11 in which the enclosing portion 24C faces in a direction orthogonal to the direction of gravity. Regardless of whether the motor device 11 is mounted to the mounting object in the first mounting orientation, the second mounting orientation, or the third mounting orientation, foreign matter FO1 can be suppressed from entering inside of the control device 13 from inside of the motor 12.

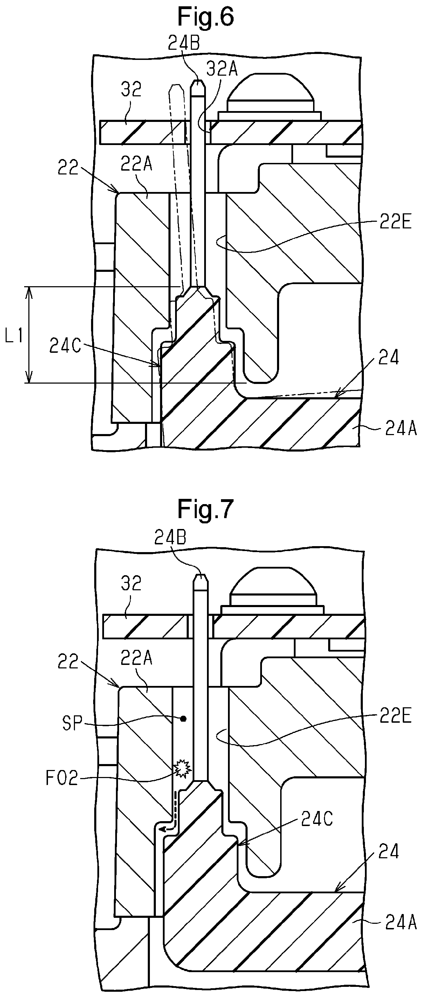

As illustrated in FIG. 6, it is conceivable that the busbar module 24 may become tilted with respect to the axial direction of the motor 12. However, the fitting length L1 between the enclosing portion 24C and the terminal insertion hole 22E is set such that when the busbar module 24 is tilted with respect to the axial direction of the motor 12, the enclosing portion 24C comes into contact with the inner circumferential face of the terminal insertion hole 22E before the motor terminals 24B do. Accordingly, when the busbar module 24 is tilted with respect to the axial direction of the motor 12, the enclosing portion 24C comes into contact with the inner circumferential face of the terminal insertion hole 22E before the motor terminals 24B do. Specifically, a distal end corner portion of the first insertion portion 24C1 of the enclosing portion 24C comes into contact with the inner circumferential face of the first hole portion 22E1. Accordingly, contact between the motor terminals 24B and the inner circumferential face of the terminal insertion hole 22E is suppressed.

The terminal insertion hole 22E is provided in the thick-walled portion 22A of the bearing holder 22. The thick-walled portion 22A has higher rigidity than the thin-walled portion 22B. Accordingly, when the busbar module 24 is tilted with respect to the axial direction of the motor 12 and the enclosing portion 24C comes into contact with the inner circumferential face of the terminal insertion hole 22E, the enclosing portion 24C is supported by the inner circumferential face of the terminal insertion hole 22E in a stable manner.

Note that when the busbar module 24 is tilted with respect to the axial direction of the motor 12, the longer the fitting length L1 is, the smaller the degree of tilt of the motor terminals 24B will be. However, the longer the fitting length L1 is, the smaller the portion of the motor terminals 24B exposed from the enclosing portion 24C will be. Therefore, when the fitting length L1 is too long, the portions of the motor terminals 24B that are exposed from the enclosing portion 24C will not bend readily. When the motor terminals 24B bend less readily, inserting the distal ends of the motor terminals 24B into motor terminal connection portions 32A of the power board 32 may become difficult when assembling the motor device 11. The motor terminal connection portions 32A are holes that pass through the power board 32 in the thickness direction and are provided corresponding to each of the motor terminals 24B.

Accordingly, in the present embodiment, in order to ensure the flexibility of the portion of the motor terminals 24B that are exposed from the enclosing portion 24C, the fitting length L1 is set to, for example, about half the total length L2 of the terminal insertion hole 22E. Thus, when assembling the motor device 11, inserting the distal ends of the motor terminals 24B into the motor terminal connection portions 32A of the power board 32 is facilitated.

Incidentally, the space SP exists around the portion of the motor terminals 24B that are exposed from the enclosing portion 24C. The space SP is the clearance between the inner circumferential face of the first hole portion 22E1 of the terminal insertion hole 22E and the surface of the motor terminals 24B. The presence of this space SP allows the portions of the motor terminal 24B that is exposed from the enclosing portion 24C to bend. In other words, flexibility is ensured in the portion of the motor terminals 24B that are exposed from the enclosing portion 24C.

As illustrated in FIG. 7, foreign matter FO2 may be generated inside the control device 13. Examples of foreign matter FO2 include dust, and solder that has become detached from the power board 32. However, part of the foreign matter FO2 remains inside the space SP. Accordingly, the presence of the space SP suppresses the foreign matter FO2 from entering inside of the motor 12 from the control device 13.

Also, the crank-shaped clearance between the outer circumferential face of the enclosing portion 24C and the inner circumferential face of the terminal insertion hole 22E functions as a labyrinth structure. Accordingly, foreign matter FO2 generated inside the control device 13 does not readily pass through the crank-shaped clearance. Thus, foreign matter FO2 generated inside the control device 13 is suppressed from entering inside of the motor 12 from the control device 13.

### <Effects of Embodiment>

The present embodiment yields the following effects.
(1) A busbar holder 24A includes an enclosing portion 24C that encloses a portion including basal ends of motor terminals 24B. The enclosing portion 24C is inserted into a terminal insertion hole 2D, so as not to completely pass through the terminal insertion hole 22E, which is provided in a thick-walled portion 22A, in the axial direction. A space SP exists around a portion of the motor terminals 24B exposed from the enclosing portion 24C. The space SP is a clearance between an inner circumferential face of the terminal insertion hole 22E and a surface of the motor terminals 24B. According to this configuration, the enclosing portion 24C is inserted into the terminal insertion hole 22E provided in the thick-walled portion 22A. The thick-walled portion 22A has higher rigidity than a thin-walled portion 22B. Accordingly, the motor terminals 24B can be stably supported. Also, the space SP exists around a portion of the motor terminals 24B exposed from the enclosing portion 24C. This ensures that distal ends of the motor terminals 24B have a degree of freedom, thereby facilitating connecting of the motor terminals 24B to a power board 32.
(2) The terminal insertion hole 22E includes a first stepped portion 22E3. The enclosing portion 24 includes a second stepped portion 24C3. The first stepped portion 22E3 and the second stepped portion 24C3 face each other in the axial direction of the motor 12. According to this configuration, a crank-shaped clearance is formed between an outer circumferential face of the enclosing portion 24C and the inner circumferential face of the terminal insertion hole 22E. The crank-shaped clearance functions as a labyrinth structure. Accordingly, foreign matter FO1 generated inside the motor 12 does not readily pass through the crank-shaped clearance. Thus, foreign matter generated inside the motor 12 can be suppressed from entering inside of the control device 13. Also, foreign matter FO2 generated inside the control device 13 is less likely to pass through the crank-shaped clearance. Accordingly, foreign matter FO2 generated inside the control device 13 can be suppressed from entering the inside of the motor 12.
(3) The motor terminals 24B are disposed on an outward side in a radial direction from an outer circumferential face of a stator 23. As illustrated in this configuration, depending on product specifications, the motor terminals 24B may be disposed outward in the radial direction from the outer circumferential face of the stator 23.
(4) The thick-walled portion 22A protrudes in an opposite direction from the stator 23, with respect to the thin-walled portion 22B. According to this configuration, a length of a motor device 11 in the axial direction can be shortened as compared to a case in which the thick-walled portion 22A is thicker than the thin-walled portion 22B in a direction toward the stator 23.
(5) The busbar holder 24A is a cylindrical body having a circular cross-sectional shape. A portion of the bearing holder 22 that holds a second bearing 22D is inserted inside of the busbar holder 24A without contact with the busbar holder 24A. The portion that holds the second bearing 22D is a second bearing support portion 22C. Thus, a position of the second bearing 22D in the axial direction and a position of the busbar holder 24A in the axial direction overlap. This configuration enables effective use of internal space of the busbar holder 24A, which would otherwise be dead space. Also, axial-direction length of the motor device 11 can be shortened by an amount equivalent to the overlapping of the position of the second bearing 22D in the axial direction and the position of the busbar holder 24A in the axial direction .
(6) A fitting length L1 between the enclosing portion 24C and the terminal insertion hole 22E is within a tolerance range of which half of a total length L2 of the terminal insertion hole 22E is a reference. According to this configuration, the motor terminals 24B can be stably supported, while ensuring a degree of freedom at the distal ends of the motor terminals 24B.
(7) The fitting length L1 between the enclosing portion 24C and the terminal insertion hole 22E is set such that when the busbar module 24 is tilted with respect to the axial direction of the motor 12, the enclosing portion 24C comes into contact with the inner circumferential face of the terminal insertion hole 22E before the motor terminals 24B do. Accordingly, contact between the motor terminals 24B and the inner circumferential face of the terminal insertion hole 22E is suppressed.
(8) As a support structure for the motor terminals 24, for example, supporting the motor terminals 24B, via a rubber bushing that is fitted into the terminal insertion hole 22E, is conceivable. In this case, the rubber bushing needs to be prepared separately. According to the present embodiment, the enclosing portion 24C that supports the motor terminals 24B is integrally molded with the busbar holder 24A. Thus, the motor terminals 24B can be stably supported without adding the rubber bushing. Accordingly, increase in assembly processes of the motor device 11 or an increase in product costs, can be suppressed.

### <Other Embodiments>

The present embodiment may be carried out modified as follows.
- The windings 23D may make up a first winding group and a second winding group. When the windings 23D of the motor 12 make up two winding groups, the control device 13 independently controls the power supply to each winding group of the two winding groups. Two sets of three-phase motor terminals 24 are provided.

## Claims

1. A motor device comprising:
a motor; and
a control device including a board that is provided at an end portion of the motor,
the motor including
a case including an end wall at a first end portion on an opposite side from the control device,
a stator that is cylindrical, includes a plurality of windings, and is fitted into an inner circumferential face of the case,
a rotor that is disposed inside of the stator without being in contact with the stator, and that includes an output shaft that passes through the stator in an axial direction,
a bearing that rotatably supports the output shaft,
a bearing holder that is made of metal and is attached to a second end portion of the case, and holds the bearing, and
a busbar module disposed between the stator and the bearing holder, wherein
the bearing holder includes a thick-walled portion including a terminal insertion hole that passes through in the axial direction, and a thin-walled portion that is thinner in the axial direction than the thick-walled portion,
the busbar module includes a plurality of busbars and a busbar holder, made of resin, that holds the busbars,
the busbar includes motor terminals that pass through the terminal insertion hole in the axial direction without coming into contact with an inner circumferential face of the terminal insertion hole, and that are connected to the board,
the busbar holder includes an enclosing portion that encloses a portion including basal ends of the motor terminals, and the enclosing portion is inserted into the terminal insertion hole so as not to completely pass through the terminal insertion hole in the axial direction, and
a space exists around a portion of the motor terminals that is exposed from the enclosing portion, and the space is a clearance between the inner circumferential face of the terminal insertion hole and a surface of the motor terminals.

2. The motor device according to claim 1, wherein the terminal insertion hole and the enclosing portion include stepped portions that face each other in the axial direction.

3. The motor device according to claim 1 or 2, wherein the motor terminals are disposed on an outward side in a radial direction from an outer circumferential face of the stator.

4. The motor device according to claim 1 or 2, wherein the thick-walled portion protrudes in an opposite direction from the stator, with respect to the thin-walled portion.

5. The motor device according to claim 1 or 2, wherein:
the busbar holder is a cylindrical body having a circular cross-sectional shape; and
a portion of the bearing holder that holds the bearing is inserted inside of the busbar holder without contact with the busbar holder, such that a position of the bearing in the axial direction and a position of the busbar holder in the axial direction overlap.

6. The motor device according to claim 1 or 2, wherein a fitting length between the enclosing portion and the terminal insertion hole is within a tolerance range of which half of a total length of the terminal insertion hole is a reference.

7. The motor device according to claim 1 or 2, wherein a fitting length between the enclosing portion and the terminal insertion hole is set such that when the busbar module is tilted with respect to the axial direction of the motor, the enclosing portion comes into contact with the inner circumferential face of the terminal insertion hole before the motor terminals.
